# EUROPÄISCHE PATENTSCHRIFT

(11) **EP 1 320 688 B1**
(45) Veröffentlichungstag und Bekanntmachung des Hinweises auf die Patenterteilung: **01.12.2004**
(21) Anmeldenummer: 01980165.3
(22) Anmeldetag: 13.09.2001
(51) Int. Cl.: F16C 11/04, F16F 1/38

(54) **GELENK**
JOINT
ARTICULATION

(30) Priorität: 28.09.2000 DE 10049247
(43) Veröffentlichungstag der Anmeldung: 25.06.2003
(73) Patentinhaber: Phoenix AG, 21079 Hamburg (DE)
(72) Erfinder: MEYER, Rüdiger, 21385 Amelinghausen (DE); FROHN, Jörg, 21337 Lüneburg (DE)
(86) Internationale Anmeldenummer: PCT/DE2001/003512
(87) Internationale Veröffentlichungsnummer: WO 2002/029265

(56) Entgegenhaltungen:
- DE-C- 3 419 967
- DE-C- 19 629 377
- US-A- 1 749 322
- US-A- 2 070 051
- US-A- 2 682 434

## Beschreibung

Die Erfindung betrifft ein Gelenk mit einer Rotationsachse X, umfassend wenigstens folgende Bauteile:
- einen Kern aus Metall oder Kunststoff (z.B. auf Basis von Polyphenylenether);
- eine Außenschale, die ebenfalls aus Metall oder Kunststoff besteht; sowie
- ein Polster aus elastomerem Werkstoff, das zwischen Kern und Außenschale angeordnet ist.

Von besonderer Bedeutung ist der Werkstoff Metall für den Kern und die Außenschale, und zwar unter Bildung eines Metall-Gummi-Gelenkes (Megi®-Gelenk).

Zur Ermöglichung hoher Torsionswinkel in Gelenken werden häufig Konstruktionen mit nicht-elastomerartigen Werkstoffen verwendet. Dabei ist das Gelenk als kugelartige Gleitpaarung (Metall/Gleitwerkstoff) ausgebildet, so dass eine Beweglichkeit um alle Achsen gegeben ist.

In der Patentschrift DE 34 19 967 C2 wird ein elastisches Gelenk mit dem gattungsgemäßen Aufbau beschrieben. Dabei ist der Kern insbesondere mit einem umlaufenden Bauch versehen. Das ebenfalls umlaufende Polster aus elastomerem Werkstoff ist zwischen der zylindrischen Außenschale (Hülse) und dem Kern eingespannt. Das Gelenk ist radial und axial belastbar, wobei zusätzlich kardanische Auslenkungen und Verdrehwinkel ausgeführt werden können.

Für die Ermöglichung hoher Torsionswinkel um nur eine Achse soll nun ein gattungsgemäßes Gelenk bereit gestellt werden, das neben der Realisierung hoher Torsionswinkel um eine Achse auch hohe Kräfte senkrecht zur Rotationsachse X, die infolge des Rückstellmomentes bei der Torsionsbelastung auftreten, aufnehmen kann.

Gelöst wird diese Aufgabe gemäß Kennzeichen des Patentanspruches 1 dadurch, dass
- der Kern mit zwei senkrecht um 180° zueinander angeordneten und in Richtung Rotationsachse X verlaufenden Zapfen versehen ist;
- die Außenschale aus zwei Halbschalen besteht, wobei jede Halbschale mit einem verstärkenden Segment versehen ist, wobei wiederum innerhalb jedes Segmentes eine Bohrung mit Bohrungsgrund vorhanden ist, wobei in die jeweilige Bohrung der korrespondierende Zapfen eindringt; und dass
- je ein Polster die Zapfen umschließt und dabei mit in die jeweilige Bohrung aufgenommen wird, wobei ferner die beiden Polster isoliert zueinander angeordnet sind.

Zweckmäßige Ausgestaltungen des erfindungsgemäßen Gelenkes, das insbesondere in einer Drehzapfenmitnahme bei einem Schienenfahrzeug zur Anwendung kommt, sind in den Patentansprüchen 2 bis 16 genannt.

Zur Gewährleistung der dauerhaften Funktion ist es besonders zweckmäßig, das Polster aus elastomerem Werkstoff in Richtung der Zapfenenden gegen diese vorzuspannen. Dies wird durch die außenmittig angeordneten Halbschalen, die gegeneinander vorgespannt einen geschlossenen Ring ergeben, ermöglicht.

Die Erfindung wird nun anhand von Ausführungsbeispielen unter Bezugnahme von Zeichnungen erläutert. Es zeigen:
- Fig. 1 bis 3: ein Gelenk in drei verschiedenen Ansichten;
- Fig. 4 bis 6: einen Kern mit Zapfen in drei verschiedenen Ansichten;
- Fig. 7 bis 9: eine Halbschale mit Bohrung in drei verschiedenen Ansichten;
- Fig. 10: ein Gelenk mit zusätzlicher Gleitbuchse.

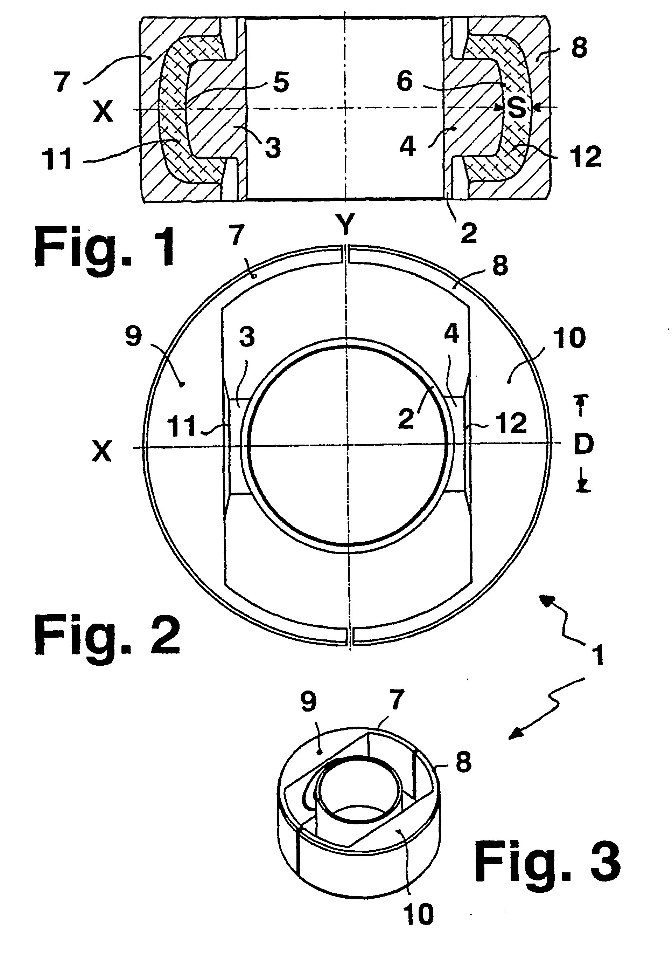

Die Fig. 1 bis 3 zeigen ein Gelenk **1,** dessen zylindrischer Kern **2** mit senkrecht um 180° zueinander angeordneten und in Richtung Rotationsachse X verlaufenden Zapfen **3** und **4** mit im wesentlichen kreisförmiger Querschnittsfläche versehen ist. Dabei umschließt je ein Polster **11** und **12** aus elastomerem Werkstoff becherförmig (topfförmig) nahezu vollständig die Zapfen (Fig. 1), wobei das Verhältnis von Zapfendurchmesser D und Schichtdicke S der Polster
D : S = 2 : 1 bis 6 : 1
beträgt. Die diesbezüglichen besonders zweckmäßigen Parameter sind:
D : S = 3 : 1 bis 5 : 1, insbesondere 4 : 1

Ferner ist es zweckmäßig, wenn die Polster in Richtung des jeweils konvex ausgebildeten Zapfenendes **5** und **6** 10 bis 15 %, insbesondere 14 %, ihrer Schichtdicke S vorgespannt sind.

Die beiden Polster **11** und **12** selbst sind isoliert zueinander angeordnet, und zwar im Unterschied zu der Polsterkonstruktion gemäß DE 34 19 967 C2.

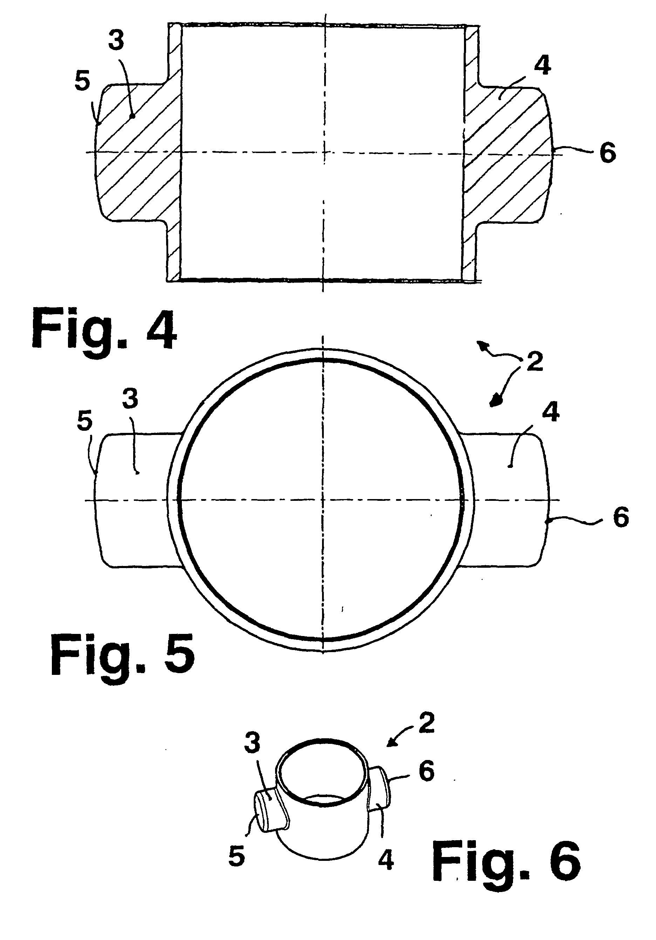

Die neuartige Kernkonstruktion wird in den Fig. 4 bis 6 optisch nochmals besonders aufgezeigt.

Nach den Fig. 1 bis 3 besteht die Außenschale des Gelenkes **1** aus zwei Halbschalen **7** und **8**, wobei deren Trennebene Y (Fig. 2) senkrecht zur Rotationsachse X verläuft. Jede Halbschale ist dabei mit einem verstärkenden Segment **9** und **10** versehen.

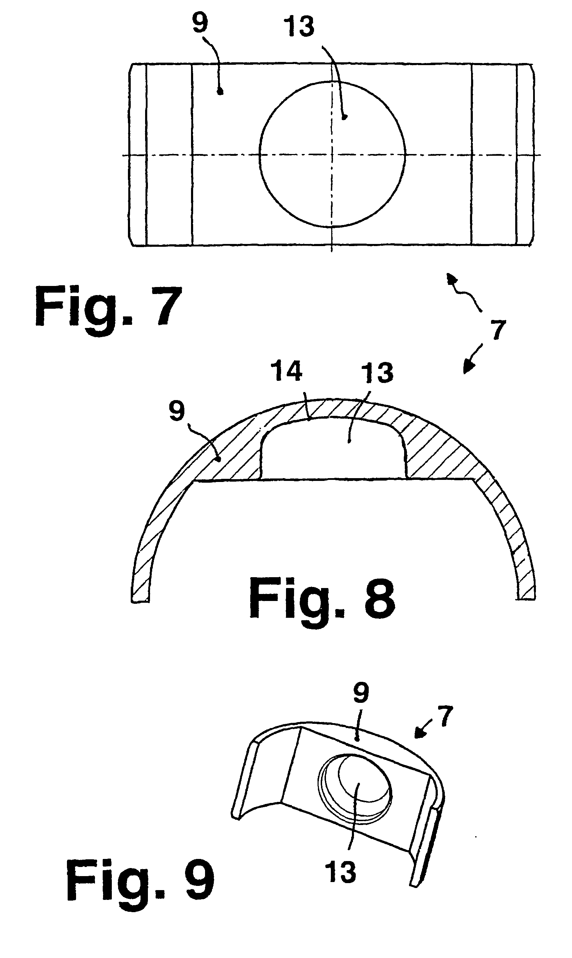

Anhand der Halbschale **7** zeigen nun die Fig. 7 bis 9 die konstruktiven Details des verstärkenden Segmentes **9.**

Innerhalb des Segmentes **9** der Halbschale **7** ist eine Bohrung **13** mit Bohrungsgrund **14** vorhanden, wobei der Bohrungsgrund die periphere Begrenzung der Außenschale ist. Die Bohrung ist dabei dem jeweiligen Zapfen korrespondierend angeordnet, wobei das entsprechende Polster in die Bohrung aufgenommen wird (Fig. 1).

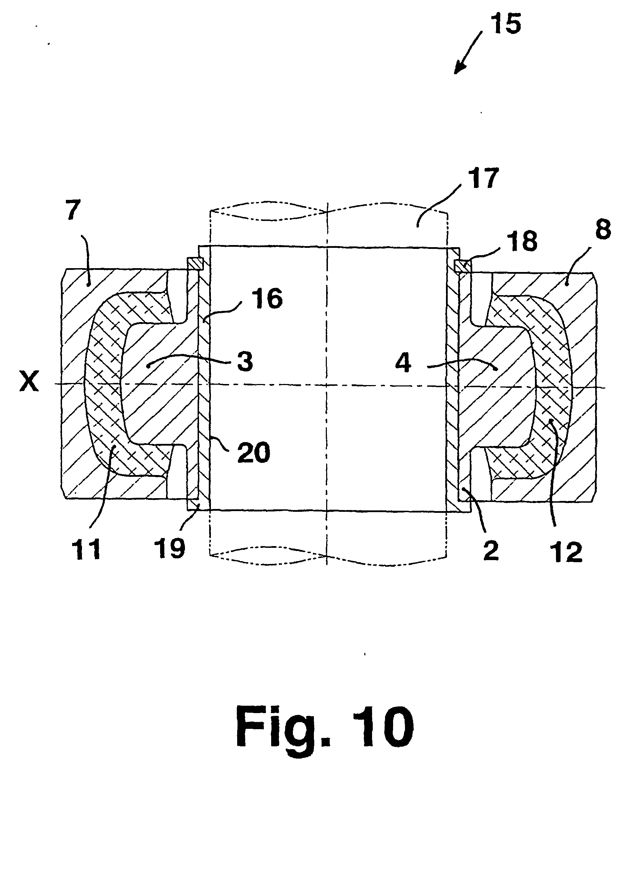

Fig. 10 zeigt nun ein Gelenk **15,** wobei im Innern des Kerns **2** senkrecht zur Rotationsachse X eine Gleitbuchse **16** zur in einer Richtung kraftfreien Aufnahme eines zylindrischen Bauteiles **17** eingesetzt ist. Der Kern 2 mit den beiden Zapfen **3** und **4** ist mittels eines Ringflansches **19** als integriertes Teil der Gleitbuchse verankert. Die Gleitfläche **20** befindet sich zwischen der Gleitbuchse und dem zylindrischen Bauteil.

Der Kern **2** mit den beiden Zapfen **3** und **4** kann auch kugelsegmentförmig ausgebildet sein.

### Bezugszeichenliste

- **1**: Gelenk (erstes Ausführungsbeispiel)
- **2**: Kern
- **3**: Zapfen
- **4**: Zapfen
- **5**: Zapfenende
- **6**: Zapfenende
- **7**: Außenschale (Halbschale)
- **8**: Außenschale (Halbschale)
- **9**: Segment der Halbschale
- **10**: Segment der Halbschale
- **11**: Polster aus elastomerem Werkstoff
- **12**: Polster aus elastomerem Werkstoff
- **13**: Bohrung
- **14**: Bohrungsgrund (periphere Begrenzung)
- **15**: Gelenk (zweites Ausführungsbeispiel)
- **16**: Gleitbuchse
- **17**: zylindrisches Bauteil
- **18**: Verankerungselement (Verankerungsring)
- **19**: Flansch (Ringflansch) der Gleitbuchse
- **20**: Gleitfläche
- **D**: Zapfendurchmesser
- **S**: Schichtdicke des Polsters
- **X**: Rotationsachse
- **Y**: Trennebene zwischen den beiden Halbschalen

## Patentansprüche

1. Gelenk (1, 15) mit einer Rotationsachse X, umfassend wenigstens folgende Bauteile:
- einen Kern (2) aus Metall oder Kunststoff;
- eine Außenschale (7, 8), die ebenfalls aus Metall oder Kunststoff besteht; sowie
- ein Polster (11, 12) aus elastomerem Werkstoff, das zwischen Kern und Außenschale angeordnet ist;
**dadurch gekennzeichnet, dass**
- der Kern (2) mit zwei senkrecht um 180° zueinander angeordneten und in Richtung Rotationsachse X verlaufenden Zapfen (3, 4) versehen ist;
- die Außenschale aus zwei Halbschalen (7, 8) besteht, wobei jede Halbschale mit einem verstärkenden Segment (9, 10) versehen ist, wobei wiederum innerhalb jedes Segmentes eine Bohrung (13) mit Bohrungsgrund (14) vorhanden ist, wobei in die jeweilige Bohrung der korrespondierende Zapfen (3, 4) eindringt; und dass
- je ein Polster die Zapfen (3, 4) umschließt und dabei mit in die jeweilige Bohrung (13) aufgenommen wird, wobei ferner die beiden Polster isoliert zueinander angeordnet sind.

2. Gelenk nach Anspruch 1, **dadurch gekennzeichnet, dass** der Kern (2) zylindrisch ausgebildet ist.

3. Gelenk nach Anspruch 1, **dadurch gekennzeichnet, dass** der Kern kugelsegmentförmig ausgebildet ist.

4. Gelenk nach einem der Ansprüche 1 bis 3, **dadurch gekennzeichnet, dass** die Zapfen (3, 4) eine im wesentlichen kreisförmige Querschnittsgestalt aufweisen.

5. Gelenk nach einem der Ansprüche 1 bis 4, **dadurch gekennzeichnet, dass** die Zapfenenden (5, 6) konvex ausgebildet sind.

6. Gelenk nach einem der Ansprüche 1 bis 5, **dadurch gekennzeichnet, dass** die Zapfenenden (5, 6) und der jeweilige Bohrungsgrund (14) eine korrespondierende Oberflächenstruktur aufweisen.

7. Gelenk nach einem der Ansprüche 1 bis 6, **dadurch gekennzeichnet, dass** die Trennebene Y der beiden Halbschalen (7, 8) senkrecht zur Rotationsachse X verläuft.

8. Gelenk nach einem der Ansprüche 1 bis 7, **dadurch gekennzeichnet, dass** die Kontur der Polster (11 ,12) becherförmig ausgebildet ist.

9. Gelenk nach einem der Ansprüche 1 bis 8, **dadurch gekennzeichnet, dass** das Verhältnis von Zapfendurchmesser D und Schichtdicke S der Polster (11, 12)
D : S = 2 : 1 bis 6 : 1
beträgt.

10. Gelenk nach Anspruch 9, **dadurch gekennzeichnet, dass** das Verhältnis von Zapfendurchmesser D und Schichtdicke S der Polster (11, 12)
D : S = 3 : 1 bis 5 : 1
beträgt.

11. Gelenk nach Anspruch 10, **dadurch gekennzeichnet, dass** das Verhältnis von Zapfendurchmesser D und Schichtdicke S der Polster (11, 12)
D : S = 4 : 1
beträgt.

12. Gelenk nach einem der Ansprüche 1 bis 11, **dadurch gekennzeichnet, dass** die Polster (11, 12) in Richtung des jeweiligen Zapfenendes (5, 6) um 10 bis 15 % ihrer Schichtdicke S vorgespannt sind.

13. Gelenk nach Anspruch 12, **dadurch gekennzeichnet, dass** die Polster (11, 12) in Richtung des jeweiligen Zapfenendes (5, 6) um 14 % ihrer Schichtdicke S vorgespannt sind.

14. Gelenk nach einem der Ansprüche 1 bis 13, **dadurch gekennzeichnet, dass** im Innern des Kerns (2) senkrecht zur Rotationsachse X eine Gleitbuchse (16) zur in einer Richtung kraftfreien Aufnahme eines zylindrischen Bauteils (17) eingesetzt ist.

15. Gelenk nach Anspruch 14, **dadurch gekennzeichnet, dass** der Kern (2) mittels eines Flansches (19) als integriertes Teil der Gleitbuchse und eines Verankerungselementes (18) an der Gleitbuchse (16) verankert ist.

16. Gelenk nach einem der Ansprüche 1 bis 15, **dadurch gekennzeichnet, dass** dieses in einer Drehzapfenmitnahme bei einem Schienenfahrzeug zur Anwendung kommt.

## Claims

1. Joint (1, 15) with a rotational axis X, comprising at least the following components:
- a core (2) made of metal or plastic,
- an outer shell (7, 8) which is also made of metal or plastic, and
- a pad (11, 12) made of elastomer material which is arranged between the core and the outer shell,
**characterised in that**
- the core (2) is provided with two pivots (3, 4) arranged perpendicularly at 180° to one another and running in the direction of the rotational axis X,
- the outer shell consists of two half shells (7, 8), each half shell being provided with a reinforcing segment (9, 10), with a bore (13) with a bore bottom (14) present inside each segment, the corresponding pivot (3, 4) extending into the respective bore, and
- a pad encloses each of the pivots (3, 4) and is accommodated with it in the respective bore (13), and further the two pads are arranged insulated from one another.

2. Joint according to claim 1, **characterised in that** the core (2) is cylindrical.

3. Joint according to claim 1, **characterised in that** the core is the shape of a spherical segment.

4. Joint according to one of claims 1 to 3, **characterised in that** the pivots (3, 4) exhibit an essentially circular cross-sectional shape.

5. Joint according to one of claims 1 to 4, **characterised in that** the ends of the pivots (5, 6) are convex.

6. Joint according to one of claims 1 to 5, **characterised in that** the ends of the pivots (5, 6) and the respective bore bottom (14) exhibit a corresponding surface structure.

7. Joint according to one of claims 1 to 6, **characterised in that** the dividing plane Y of the two half shells (7, 8) runs perpendicularly to the rotational axis X.

8. Joint according to one of claims 1 to 7, **characterised in that** the contour of the pads (11, 12) is cup-shaped.

9. Joint according to one of claims 1 to 8, **characterised in that** the ratio of the pivot diameter D and the thickness S of the pads (11, 12) is
D : S = 2 : 1 to 6 : 1

10. Joint according to claim 9, **characterised in that** the ratio of the pivot diameter D and the thickness S of the pads (11, 12) is
D : S = 3 : 1 to 5 : 1

11. Joint according to claim 10, **characterised in that** the ratio of the pivot diameter D and the thickness S of the pads (11, 12) is
D : S = 4 : 1

12. Joint according to one of claims 1 to 11, **characterised in that** the pads (11, 12) are preloaded in the direction of the respective pivot end (5, 6) by 10 to 15% of their thickness S.

13. Joint according to claim 12, **characterised in that** the pads (11, 12) are preloaded in the direction of the respective pivot end (5, 6) by 14% of their thickness.

14. Joint according to one of claims 1 to 13, **characterised in that** a slide bush (16) is inserted in the interior of the core (2) perpendicularly to the rotational axis X for force-free reception of a cylindrical component (17) in one direction.

15. Joint according to claim 14, **characterised in that** the core (2) is anchored by means of a flange (19) as an integral part of the slide bush and an anchoring element (18) on the slide bush (16).

16. Joint according to one of claims 1 to 15, **characterised in that** this is used in a pivot mounting on a rail vehicle.

## Revendications

1. Articulation (1, 15) avec un axe de rotation X, comprenant au moins les composants suivants :
- un noyau (2) en métal ou en matière synthétique ;
- une coque extérieure (7, 8) formée également en métal ou en matière synthétique ; et
- un coussin (11, 12) en matériau élastomère, disposé entre le noyau et la coque extérieure ;
**caractérisée en ce que**
- le noyau (2) est muni de deux tourillons (3, 4) disposés perpendiculairement, à 180° l'un de l'autre, et s'étendant dans la direction de l'axe de rotation X ;
- la coque extérieure est formée de deux demi-coques (7, 8), chaque demi-coque étant munie d'un segment (9, 10) de renforcement, où à son tour à l'intérieur de chaque segment est prévu un perçage (13) ayant un fond de perçage (14), le tourillon (3, 4) correspondant pénétrant dans le perçage respectif ; et **en ce que**
- chaque fois un coussin entoure les tourillons (3, 4) et est alors logé avec lui dans le perçage (13) respectif, en outre les deux coussins étant disposés de façon isolée l'un de l'autre.

2. Articulation selon la revendication 1, **caractérisée en ce que** le noyau (2) est de forme cylindrique.

3. Articulation selon la revendication 1, **caractérisée en ce que** le noyau est en forme de segment de sphère.

4. Articulation selon l'une des revendications 1 à 3, **caractérisée en ce que** les tourillons (3, 4) ont une forme de section transversale sensiblement circulaire.

5. Articulation selon l'une des revendications 1 à 4, **caractérisée en ce que** les extrémités de tourillon (5, 6) sont convexes.

6. Articulation selon l'une des revendications 1 à 5, **caractérisée en ce que** les extrémités de tourillon (5, 6) et le fond de perçage (14) respectif présentent une structure de surface correspondante.

7. Articulation selon l'une des revendications 1 à 6, **caractérisée en ce que** le plan de séparation Y des deux demi-coques (7, 8) s'étend perpendiculairement à l'axe de rotation X.

8. Articulation selon l'une des revendications 1 à 7, **caractérisée en ce que** le contour des coussins (11, 12) est conformé en godet.

9. Articulation selon l'une des revendications 1 à 8, **caractérisée en ce que** le rapport, entre le diamètre de tourillon D et l'épaisseur de couche S des coussins (11, 12), est tel que :
D : S = 2 : 1 à 6 : 1.

10. Articulation selon la revendication 9, **caractérisée en ce que** le rapport, entre le diamètre de tourillon D et épaisseur de couche S des coussins (11, 12), est tel que :
D : S = 3 : 1 à 5 : 1.

11. Articulation selon la revendication 10, **caractérisée en ce que** le rapport, entre le diamètre de tourillon D et l'épaisseur de couche S des coussins (11, 12), est tel que :
D : S = 4 : 1.

12. Articulation selon l'une des revendications 1 à 11, **caractérisée en ce que** les coussins (11, 12) sont précontraints dans la direction de l'extrémité de tourillon (5, 6) respective, d'une valeur de 10 à 15 % de leur épaisseur de couche S.

13. Articulation selon la revendication 12, **caractérisée en ce que** les coussins (11, 12) sont précontraints dans la direction de l'extrémité de tourillon (5, 6) respective, d'une valeur de 14 % de leur épaisseur de couche S.

14. Articulation selon l'une des revendications 1 à 13, **caractérisée en ce que**, à l'intérieur du noyau (2), perpendiculairement à l'axe de rotation X, est insérée une douille ou coussinet de glissement (16), pour supporter un composant (17) cylindrique sans effort dans une direction.

15. Articulation selon la revendication 14, **caractérisée en ce que** le noyau (2) est ancré, à l'aide d'une bride (19), en tant que partie intégrée de la douille ou coussinet de glissement, et d'un élément d'ancrage (18), sur la douille de glissement (16).

16. Articulation selon l'une des revendications 1 à 15, **caractérisée en ce que** celle-ci est appliquée dans un dispositif d'entraînement rotatif à tourillon, dans un véhicule ferroviaire.
